# EUROPEAN PATENT APPLICATION

(11) **EP 1 176 686 A1**
(43) Date of publication of application: **30.01.2002**
(21) Application number: 01117693.0
(22) Date of filing: 26.07.2001
(51) Int. Cl.: H02H 3/33

(54) **Emergency device for cutting off the supply of electricity from a power supply network**

(30) Priority: 28.07.2000 IT TO000756
(71) Applicant: Mele, Andrea, 37012 Bussolengo (IT); Zocca, Enrico, 37012 Bussolengo (IT)
(72) Inventor: Mele, Andrea, 37012 Bussolengo (IT); Zocca, Enrico, 37012 Bussolengo (IT)
(74) Representative: Cerbaro, Elena, Dr.

(57) **Abstract**

Emergency device (1), which is connectable to an electrical power supply network (2) through a circuit-breaker device (3), and in which the electrical power supply network (2) is provided with a phase line (4) set at a phase potential (V1), a neutral line (5) set at a neutral potential (V2) and an earth line (6) set at an earth potential; the circuit-breaker device (3) has a first and a second input terminal (7, 8) connected to the phase line (4) and to the neutral line (5) respectively, and a first and a second output terminal (9, 10) set at the phase potential (V1) and at the neutral potential (V2) respectively; the emergency device (1) is provided with a main sensor circuit (14) having a first input (27) and is capable of detecting the value of a physical quantity in order to provide a current path between the first input (27) of the main sensor circuit (14) and the earth line (6) when the value of the physical quantity has a predetermined relation to a threshold value; the emergency device (1) is also provided with a safety device (13) having a first and a second input terminal (20, 21) each of which can be connected to either of the first and second output terminal (9, 10) of the circuit-breaker device (3), and a first output (23) connected to the first input (27) of the main sensor circuit (14); the safety device (13) comprises a phase detection circuit (59) to detect which of the first and second input (20, 21) of the safety devices (13) is set at the phase potential (V1); and a selective connection circuit (60) controlled by the phase detection circuit (59) for selectively connecting the first output (23) of the safety device (13) to the first input (20) of the safety device (13) when the first input (20) of the safety device (13) is set at the phase potential (V1), and to the second input (21) of the safety device (13) when the second input (21) of the safety device (13) is set at the phase potential (V1).

## Description

The present invention relates to an emergency device for cutting off the supply of electricity from a power supply network.

The present invention can be applied advantageously, but not exclusively, to the cutting off of the supply of electricity from a power supply network to an electrical installation, following the detection of flammable gases, such as methane or LPG, present in closed environments, and the following description will explicitly refer to this application without thereby losing its generality.

In fact, the present invention can also be applied to other emergency situations, such as fire, flood and more generally the management of hazardous situations in which the immediate cutting off of the supply of electricity to an electrical installation is necessary.

As is known, an ordinary electrical power supply network comprises a first supply line, commonly known as the "phase line", set at a phase potential, which is typically approximately 220 V; a second supply line, commonly known as the "neutral line", set at a neutral potential, which is typically approximately 0 V; and a third supply line, commonly known as the "earth line", set at an earth potential, which is typically approximately 0 V.

It is also known that, in many countries, the current regulations for the safety of electrical installations require that these installations be connected to the supply network through a circuit-breaker device having the purpose of cutting off the electrical connection between the supply network and the electrical installation if the difference between the currents flowing in the phase line and in the neutral line exceeds a specified threshold.

For the purpose of cutting off the supply of electricity to electrical installations in the presence of gas in the environment, there is also a known way of using emergency devices having the purpose of tripping the circuit-breaker on the detection of a concentration of gas exceeding a specified threshold, in such a way as to avoid hazardous situations caused by the presence of an electric current in the electrical installation. An example of these hazards is the switching on of an electrical device in an environment saturated with flammable gas, which could result in an explosion.

In particular, the known emergency devices cause the tripping of the circuit-breaker device by providing a current path between the phase line and the earth line in such a way as to generate a difference between the current flowing in the phase line and the current flowing in the neutral line, this difference having a value such that the circuit-breaker device is tripped, and therefore the connection between the supply network and the electrical installation is cut off.

An example of an emergency device of the aforesaid type is described in French patent application FR-A-2 543 839.

A disadvantage of the emergency device described in this patent application, and in general of all emergency devices available on the market at present, is that the success or failure of its operation is dependent on the way in which it is connected to the circuit-breaker device.

This is because, in order to trip the circuit-breaker device, the aforesaid emergency device makes a connection between one specific input of the circuit-breaker device and the earth line, as a result of which, if this specific input is connected to the phase line, which is set at a potential other than that of the earth line, a current is generated which causes the tripping of the circuit-breaker device, but if this specific input is connected to the neutral line, which is set at the same potential as the earth line, either no current will be generated, or the current which is generated will be insufficient to cause the tripping of the circuit-breaker device, thus giving rise to very hazardous situations.

The object of the present invention is to provide an emergency device for cutting off the supply of electricity from a power supply network, which is free of the disadvantages described above.

According to the present invention, an emergency device for cutting off the supply of electricity from a power supply network is provided, as specified in Claim 1.

According to the present invention, a safety device is also provided for an emergency device for cutting off the supply of electricity from a power supply network, as specified in Claim 14.

The invention will now be described with reference to the attached drawings, which show, without restrictive intent, an example of its embodiment, in which:
- Figure 1 shows schematically a block diagram of the circuit of an emergency device made according to the principles of the present invention; and
- Figure 2 shows an electrical diagram of a safety device forming part of the emergency device of Figure 1.

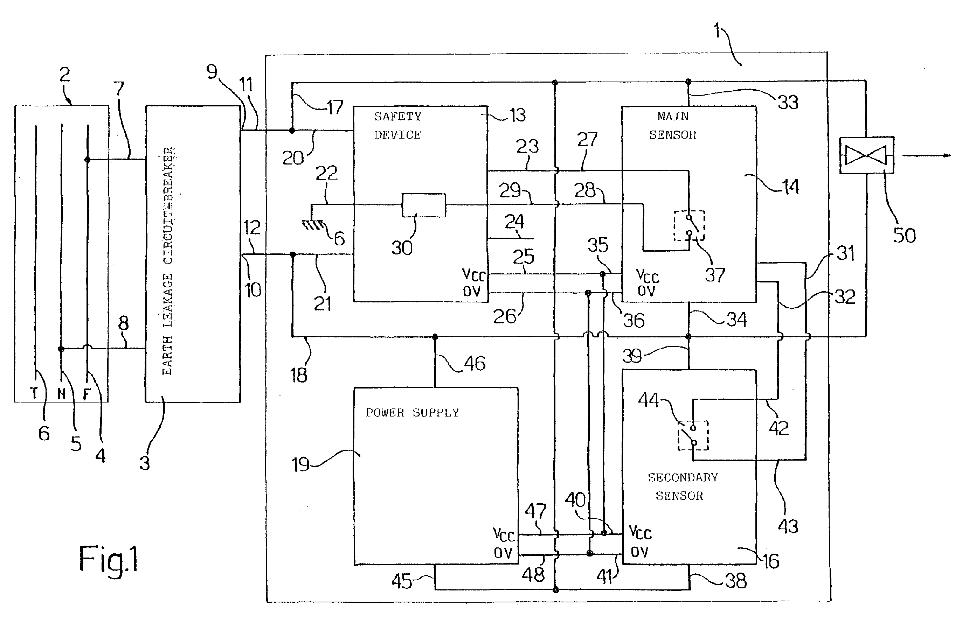

With reference to Figure 1, the number 1 indicates, as a whole, an emergency device which is connected, through an earth leakage circuit-breaker 3 of a known type, to a supply network 2, and is capable of detecting the concentration of flammable gas, such as methane gas or LPG, in a closed environment such as a domestic environment, and, when the detected gas concentration exceeds a specified threshold, of cutting off the supply of electricity from the supply network 2 to an electrical installation (not illustrated) connected down-line from the earth leakage circuit-breaker 3 (which is located in the said environment).

The supply network 2 comprises a phase line 4, a neutral line 5, and an earth line 6, set, respectively, at a phase potential V1, at a neutral potential V2 and at an earth potential V3; generally, the standard potentials for public use are fixed as follows: for the phase line 4, at V1 = 220 V a.c. with respect to the neutral line 5; for the neutral line 5, at V2 = 0 V; and for the earth line 6, at V3 = 0 V.

The earth leakage circuit-breaker 3 has a first and a second input terminal 7 and 8 connected to the phase line 4 and to the neutral line 5 respectively, and a first and a second output terminal 9 and 10, referred to below as the "phase terminal" 9 and the "neutral terminal" 10 respectively, and connected, respectively, to a first and second input terminal 11 and 12 of the emergency device 1.

As stated previously, the earth leakage circuit-breaker 3 has the function of cutting off the electrical connection between the electrical installation and the supply network 2 if the current flowing in the phase line 4 exceeds the current flowing in the neutral line 5 by a specified threshold amount (this threshold being fixed at 30 mA in domestic installations, for example).

In particular, when the earth leakage circuit-breaker 3 is closed the phase terminal 9 is connected to the phase line 4 set at the phase potential V1, while the neutral terminal 10 is connected to the neutral line 5 set at the neutral potential V2, whereas when the earth leakage circuit-breaker 3 is open the phase terminal 9 and the neutral terminal 10 are electrically isolated from the phase line 4 and from the neutral line 5.

The phase terminal 9 and the neutral terminal 10 are also connected to the aforesaid electrical installation, which is not illustrated, since it does not form part of the present invention.

The emergency device 1 comprises a first and second common line 17, 18, connected, respectively, to the first and second input terminal 11, 12 of the emergency device 1; a safety circuit 13; a main sensor circuit 14; a plurality of secondary sensor circuits 16, only one of which is shown in Figure 1; and a power supply circuit 19, all connected to the first and second common line 17, 18.

The safety circuit 13 has a first input 20 connected to the first common line 17; a second input 21 connected to the second common line 18; a third input 22 connected to the earth line 6; a first, a second and a third output 23, 24, 29; and a first and a second power supply terminal 25 and 26, whose function is described in detail below.

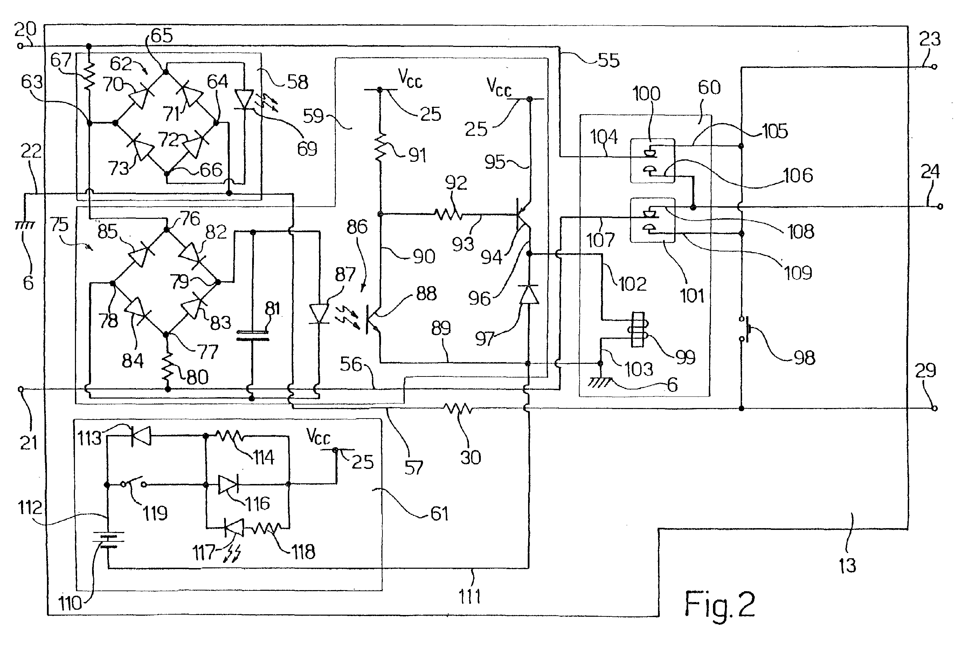

In particular, as described in detail below with reference to Figure 2, the safety circuit 13 is designed in such a way that its first output 23 is connected to its input 20 or 21 which is set at the phase potential V1, and its second output 24 is connected to its input 20 or 21 which is set at the neutral potential V2. In other words, regardless of the connections between the first and the second input 11, 12 of the emergency device 1 and the phase terminal 9 and neutral terminal 10 of the . circuit-breaker device 3, the safety circuit 13 always has its first output 23 connected to the phase terminal 9.

The third output 29 is connected to the third input 22 through a resistor 30.

The main sensor circuit 14 has a first and a second input 27, 28 connected, respectively, to the first and the second output 23, 29 of the safety circuit 13; and a third and a fourth input 31, 32 connected to the secondary sensor circuits 16, in the way described in detail below.

The main sensor circuit 14 also has a first and a second power supply terminal 33, 34 connected, respectively, to the first and the second common line 17, 18 for supplying the main sensor circuit 14; and a third and a fourth power supply terminal 35, 36, which are connected to the first and the second power supply terminal 25, 26 of the safety circuit 13 and across which there is a continuous potential difference, of 12 V for example, generated by an auxiliary power source (not illustrated) of a known type, for example a buffer battery kept constantly charged by means of a transformer connected to the first and to the second power supply terminal 25, 26, and capable of supplying the safety device 13 in case of an interruption in the electricity supply.

The main sensor circuit 14, which is of a known type and is therefore not described in detail, is designed to detect the concentration of gas present in the environment in which it is located and to provide a connection between the first and the second input 27, 28 when the measured gas concentration exceeds a specified threshold, which may, for example, be 10% of the lower explosibility limit of the gas (generally fixed at 5% by volume for methane and 1.8% for LPG). In particular, the connection of the first and the second input 27, 28 is made by means of an internal relay switch circuit shown schematically as a switch in Figure 1 and indicated by the number 37.

The secondary sensor circuits 16 are located in different environments from that in which the main sensor circuit 14 is located, to detect the presence of gas in these environments, and are connected to the main sensor circuit 14 to make the connection between the first and the second input 27, 28 of the main sensor circuit 14 if gas is detected in these environments.

In particular, each of the secondary sensor circuits 16 comprises a first and a second power supply terminal 38, 39 connected, respectively, to the first and the second common line 17, 18 for the supply of the secondary sensor circuit 16; a third and a fourth power supply terminal 40, 41 connected to the first and the second power supply terminal 25, 26 of the safety circuit 13; and a first and a second output 42, 43 connected, respectively, to the third and the fourth input 31, 32 of the main sensor circuit 14.

In detail, each secondary sensor circuit 16 is designed to detect the concentration of gas present in the corresponding environment and to make a connection between the first and the second output 42, 43 when the concentration of gas exceeds a specified threshold. In particular, the connection of. the first and the second output 42, 43 is made by means of an internal relay switch circuit shown schematically as a switch in Figure 1 and indicated by the number 44.

The connection of the first and the second output 42, 43 thus makes a connection of the third and the fourth input 31, 32 of the main sensor circuit 14 and this condition is detected by the main sensor circuit 14, which causes the switch circuit 37 to close.

Each secondary sensor circuit 16 also comprises an auxiliary power source (not illustrated) of a known type, for example a buffer battery, connected to the third and to the fourth power supply terminal 40, 41, and capable of supplying the secondary sensor circuit 16 even if the electricity supply fails.

The power supply circuit 19 has a first and a second input terminal 45, 46, connected to the common first and second line 17 and 18, and a first and a second output 47, 48 connected to the third and the fourth power supply terminals 25, 26, 35, 36 and 40, 41 of the safety device 13, of the main sensor circuit 14 and of the secondary sensor circuits 16, to which terminals it supplies a continuous potential difference, of 12 V for example, for recharging the corresponding auxiliary power sources.

The first and the second common line 17, 18 also supply a gas solenoid valve 50, which is positioned in a gas pipe and is capable of cutting off the flow of gas in the said passage duct when its electricity supply is cut off. In particular, when the gas solenoid valve 50 is supplied with electricity it is open and permits the flow of gas in the gas pipe, while when it is not supplied with electricity the gas solenoid valve 50 is closed and prevents the flow of gas in the gas pipe.

Figure 2 shows the electrical circuit of the safety circuit 13.

As shown in Figure 2, the safety device 13 comprises a first and a second line 55, 56 connected to the first and the second input 20, 21 respectively, and a third line 57 connecting the third input 22 through the resistor 30 to the third output 29.

The safety circuit 13 also comprises an earth connection detector circuit 58, a phase detector circuit 59, a switch circuit 60 controlled by the phase detector circuit 59, and an auxiliary power supply circuit 61.

The earth connection detector circuit 58 is connected between the first line 55 and the third input 22 of the safety circuit 13, and is capable of indicating the presence of a correct connection to the earth line 6 of the third input terminal 22 of the safety circuit 13.

In particular, the earth connection detector circuit 58 comprises a diode bridge 62 having a first, a second, a third and a fourth node, indicated by 63, 64, 65 and 66. The first node 63 is connected, through a resistor 67, to the first line 55, the second node 64 is connected to the third input 22, the third node 65 is connected to an anode terminal of a light-emitting diode (LED) 69, which has a cathode terminal connected to the fourth node 66 and has the function of indicating the presence of a correct connection between the earth line 6 and the third input terminal 22 of the safety device 13.

The diode bridge 62 comprises a first diode 70 having anode and cathode terminals connected to the first and the third node 63, 65 respectively; a second diode 71 having anode and cathode terminals connected to the second and the third node 64, 65 respectively; a third diode 72 having anode and cathode terminals connected to the fourth and the second node 66, 64 respectively; and a fourth diode 73 having anode and cathode terminals connected to the fourth and the first node 66, 63 respectively.

The phase detector circuit 59 comprises a diode bridge 75 having a first, a second, a third and a fourth node, indicated by 76, 77, 78 and 79. The first node 76 is connected to the first node 63 of the diode bridge 62, the second node 77 is connected, through a resistor 80, to the second line 56, the third node 78 is connected to a first terminal of a capacitor 81, which has a second terminal connected to the fourth node 79 and acts as a smoothing filter.

The diode bridge 75 comprises a first diode 82 having anode and cathode terminals connected to the first and the fourth node 76, 79 respectively; a second diode 83 having anode and cathode terminals connected to the second and the fourth node 77, 79 respectively; a third diode 84 having anode and cathode terminals connected to the third and the second node 78, 77 respectively; and a fourth diode 85 having anode and cathode terminals connected to the third and the first node 78, 76 respectively.

The phase detector circuit 59 also comprises a photocoupler 86 of a known type, comprising an emitting diode 87, for example an infrared emitting diode IRED, connected in parallel to the capacitor 81, and a phototransistor 88, coupled to the emitting diode 87 to receive the radiation emitted by the latter.

In particular, the emitting diode 87 has anode and cathode terminals connected, respectively, to the second and the first terminal of the capacitor 81, while the phototransistor 88 has an emitter terminal 89 connected to the earth line 6, and a collector terminal 90 connected, through a resistor 91, to the third power supply terminal 25 of the safety device 13.

The collector terminal 90 of the phototransistor 88 is also connected, through a resistor 92, to a base terminal 93 of a bipolar PNP transistor 94, whose emitter terminal 95 is connected to the third power supply terminal 25 of the safety device 13, and whose collector 96 is connected to the switch circuit 60.

The phase detector circuit 59 finally comprises a protection diode 97 having anode and cathode terminals connected, respectively, to the emitter terminal 89 of the bipolar transistor 88 and to the collector terminal 96 of the bipolar transistor 94, and having the function of protecting the transistor 88 from excess voltages.

The switch circuit 60 consists of an electromagnetic relay switch comprising a coil 99 and a first and a second contact 100, 101 of the single-pole two-way type, operated by the coil 99.

In particular, the coil 99 has a first terminal 102 connected to the collector terminal 96 of the bipolar transistor 94, and a second terminal 103 connected to the earth line 6.

The first contact 100 has a pole 104 connected to the first line 55; a first way 105, normally in contact with the pole 104, connected to the first output 23 of the safety device 13; and a second way 106 connected to the second output 24 of the safety device 13.

The second contact 101 has a pole 107 connected to the second line 56; a first way 108, normally in contact with the pole 107, connected to the second output 24 of the safety device 13; and a second way 109 connected to the first output 23 of the safety device 13.

In the condition in which the coil 99 is not energized, the first input 20 is connected to the first output 23, and the second input 21 is connected to the second output 24, while, in the condition in which the coil 99 is energized, the first input 20 is connected to the second output 24 and the second input 21 is connected to the first output 23.

Additionally, the first output 23 is connected to the third output 29 through a manually operable push button, which is normally open and enables a test operation to be carried out on the earth leakage circuit-breaker 3 to check that it is operating correctly; in particular, pressing the button 98 connects the phase terminal 9 through the resistor 30 to the earth line 6, which results in the flow of a considerable current to the phase terminal 9 of the earth leakage circuit-breaker 3 and therefore causes the tripping of the latter.

The auxiliary power supply circuit 61 comprises a buffer battery 110 having a first terminal 111 connected to the earth line 6, and a second terminal 112 connected through a diode 113 and a resistor 114 to the third power supply terminal 25; in detail, the diode 113 has a cathode terminal connected to the second terminal 112 of the buffer battery 110 and an anode terminal connected to a first terminal of the resistor 114, which has a second terminal connected to the third power supply terminal 25.

The diode 113 has the function of connecting the battery 110 to the power supply circuit 19 for recharging the battery 110; in particular, the diode 113 becomes conducting when the power supply voltage supplied by the battery 110 is less than the voltage supplied by the power supply circuit 19 to the third power supply terminal 25.

The auxiliary power supply circuit 61 also comprises a diode 116, which has its anode and cathode connected, respectively, to the first and the second terminal of the resistor 114, and a light-emitting diode (LED) 117, which has its cathode and anode connected, respectively, to the first terminal of the resistor 114 and to a first terminal of a resistor 118, whose second terminal is connected to the second terminal of the resistor 114.

In detail, the light-emitting diode 117 has the function of indicating a condition of recharging of the battery 110, and the diode 116 allows the battery 110 to supply the power supply voltage to the third power supply terminal 25 if the emergency device 1 is not supplied by the power supply network 2.

The auxiliary power supply circuit 61 finally comprises a switch 119, which is connected in parallel to the diode 113 and is normally open; in particular, the switch 119 is a manually operable switch and has the function of electrically connecting the battery 110 to the rest of the safety circuit 13, and particularly to the third power supply terminal 25.

The operation of the emergency device 1 shown in Figure 1 and of the safety circuit 13 shown in Figure 2 is as follows.

The emergency device 1 detects, by means of the main sensor circuit 14 or the secondary sensor circuits 16, the concentration of gas present in the environments in which they are located; in particular, when the main sensor circuit 14 or one of the secondary sensor circuits 16 detects a gas concentration greater than the threshold, the switch circuit 37 of the main sensor circuit 14 is closed, thus forming a connection between the first and the second input terminal 27, 28 of the main sensor circuit 14.

Thus the first output 23 of the safety device 13 is connected, through the resistor 30, to the earth line 6.

Since the first output 23 of the safety device 13 is always set at the phase potential V1, the connection of the first output 23 of the safety device 13 to the earth line 6 causes a considerable increase in the current flowing in the phase terminal 9 of the circuit-breaker device 3 with respect to that flowing in the neutral terminal 10, and this causes the tripping of the circuit-breaker device 3 and the consequent cutting off of the electricity supply to the electrical installation.

It is emphasized that the correct operation of the emergency device 1 is ensured by the presence of the safety device 13, which, as stated previously, has the function of ensuring the presence of the phase potential V1 on the first output 23 of the safety circuit 13, thus always causing an increase in the current flowing in the phase terminal 9, regardless of the connection of the safety device 13 to the earth leakage circuit-breaker 3.

To demonstrate this, with reference to Figure 2, we shall consider a first initial configuration (shown in Figure 1), in which the first input 11 of the emergency device 1 is connected to the phase terminal 9 set at the phase potential V1 and the second input 12 of the emergency device 1 is connected to the neutral terminal 10 set at the neutral potential V2.

In this condition, the emitting diode 69 of the earth connection detector circuit 58 is switched on, while the phase detector circuit 59 causes the switch circuit 60 to remain in the operating condition shown in Figure 2, in which the poles 104, 107 of the contacts 100, 101 of the relay are connected to the first ways 105, 108 respectively.

In detail, during the positive half-wave, the current flows from the first to the third common line 55, 57 along a path formed by the resistor 67, the diode 70, the emitting diode 69, and the diode 72, thus causing the lighting of the emitting diode 69.

During the negative half-wave, however, the current flows between the first and the third common line 55, 57 along a path formed by the resistor 67, the diode 73, the emitting diode 69, and the diode 71, thus also causing the lighting of the emitting diode 69 in this case.

Therefore, when the safety device 13 is correctly connected to earth, the emitting diode 69 is always switched on, thus indicating this condition to the user.

During the positive half-wave, the current also flows between the first and the second common line 55, 56 along a path formed by the resistor 67, the diode 82, the emitting diode 87, the diode 84 and the resistor 80, while during the negative half-wave the current flows between the first and the second common line 55, 56 along a path formed by the resistor 67, the diode 85, the emitting diode 87, the diode 83 and the resistor 80.

During both half-waves, however, the emitting diode 87 remains off because, owing to the presence of the resistors 67 and 80, the current flowing in the emitting diode 87 is below the threshold of illumination of the said emitting diode 87.

In this condition, the first input 20 set at the phase potential V1 is connected to the first output 23, while the second input 21, set at the neutral potential V2, is connected to the second output 24.

We shall now consider a second possible configuration (not illustrated) of the connections between the first and the second input terminal 11, 12 of the emergency device and the phase and neutral terminals 9, 10 of the circuit-breaker device 3; in particular, we shall consider the configuration in which the first terminal 11 is connected to the neutral terminal 10 and the second input terminal 12 is connected to the phase terminal 9.

In this condition, the emitting diode 69 of the earth connection detector circuit 58 is switched on, while the phase detector circuit 59 causes the switching of the switch circuit 60, which is brought into a second operating condition in which the poles 104, 107 of the contacts 100, 101 of the relay are connected to the second ways 106, 109 respectively.

In detail, during the positive half-wave the current flows between the second and the third common line 56, 57 along a path formed by the resistor 80, the diode 83, the emitting diode 87, the diode 85, the diode 70, the emitting diode 69 and the diode 72.

The emitting diode 69 is therefore switched on and the emitting diode 87 emits light radiation towards the phototransistor 88, which is switched on and starts to conduct a current through the resistor 91; this switches on the transistor 94, which allows current to flow through the coil 99 of the switch circuit 60.

In these conditions, the switch circuit 60 is brought into the second operating condition in which the poles 104, 107 of the contacts 100, 101 are connected to the second ways 106, 109 respectively, and thus the first output 23 is connected to the second input 21 on which the phase potential V1 is present, while the second output 24 is connected to the first input 20 set at the neutral potential V2.

During the negative half-wave, however, the current flows between the second and the third common line 56, 57 along a path formed by the resistor 80, the diode 84, the emitting diode 87, the diode 82, the diode 73, the emitting diode 69 and the diode 71.

The emitting diodes 87 and 69 are therefore switched on and the phototransistor 88 causes the transistor 94 to be switched on, which allows current to flow in the coil 99 and causes the switching of the switch circuit 60.

In these conditions, the switch circuit 60 remains in the aforesaid second operating condition in which the poles 104, 107 of the contacts 100, 101 are connected to the second ways 106, 109 respectively.

In this case also, therefore, the first output 23 is connected to the second input 21 on which the phase potential V1 is present, while the second output 24 is connected to the first input 20 on which the neutral potential V2 is present.

With reference to the above description, it should be pointed out that the emergency device 1 has the advantage of operating reliably with any configuration of the input connections; this is because, regardless of the connections between the first and the second input terminal 11, 12 of the emergency device 1 and the phase terminal 9 and neutral terminal 10 of the circuit-breaker device 3, the safety circuit 13 always provides a connection to the phase terminal 9 at the first input 27 of the main sensor circuit 14.

Moreover, the use of the emergency device 1 results in shorter installation times and great practicality of use, since, when it is connected to the circuit-breaker device 3, it is not necessary to make a distinction between the phase terminal 9 and the neutral terminal 10 of the circuit breaker 3.

Finally, the emergency device 1 can be used to test the efficiency of the earthing of the electrical installation; this is because an operator can determine, by pressing the button 98, whether the earth leakage circuit-breaker is operating correctly.

In conclusion, it is clear that the described emergency device 1 can be modified and varied in numerous ways while remaining within the scope of the inventive concept, as defined in the attached claims.

For example, as stated initially, the emergency device 1 can be used to cut off the supply of electricity in emergency situations other than that which has been described, for example in case of fire, flood, etc.

In the aforesaid emergency situations, the main sensor circuit 14 and the secondary sensor circuits 16 must clearly be different from those described, since they must be capable of detecting the presence of these emergency situations. In particular, if the emergency device 1 is used to cut off the supply of electrical energy in case of fire, the main sensor circuit 14 and the secondary sensor circuits 16 must be of the type which can detect the temperature in an environment, while if the emergency device 1 is used to cut off the supply of electricity in case of flood, the main sensor circuit 14 and sensor circuit 14 and the secondary sensor circuits 16 must be of the type which can detect the moisture level in an environment.

Additionally, the connection between the third output 29 and the third input 22 of the safety device 13 can be removed; in this case, the main sensor circuit 14 is connected directly to the earth line 6 through a resistor or through an inductor or, more generally, through an impedance.

## Claims

1. Emergency device (1) connectable to an electrical power supply network (2) through circuit-breaker means (3), said power supply network (2) comprising a phase line (4) set at a phase potential (V1), a neutral line (5) set at a neutral potential (V2) and an earth line (6) set at an earth potential (V3); said circuit-breaker means (3) having a first and a second input (7, 8) connected to said phase line (4) and to said neutral line (5) respectively, and a first and a second output (9, 10) set at said phase potential (V1) and at said neutral potential (V2) respectively; said emergency device (1) comprising first sensor means (14) for sensing a physical quantity; said emergency device (1) being **characterized in that** it further comprises safety means (13) connected to said first sensor means (14), and comprising a first and a second input (20, 21) each of which can be connected to either of said first and second output (9, 10) of said circuit-breaker means (3); phase detection means (59) for detecting which of the first and second input (20, 21) of the safety means (13) is set at said phase potential (V1); and selective connection means (60) controlled by said phase detection means (59) for selectively providing a current path between the input (20, 21) of the safety means (13) set at said phase potential (V1) and said earth line (6) when the value of said physical quantity has a predetermined relation to a threshold value.

2. Emergency device (1) according to Claim 1, **characterized in that** said first sensor means (14) has a first input (27) connectable to a first output (23) of said safety means (13), and provides a current path between its first input (27) and said earth line (6) when the value of said physical quantity has said predetermined relation to said threshold value; and **in that** said selective connection means (60) selectively connects the first output (23) of the safety means (13) to the first input (20) of the safety means (13) when the first input (20) of the safety means (13) is set at said phase potential (V1), and to the second input (21) of the safety means (13) when the second input (21) of the safety means (13) is set at said phase potential (V1).

3. Emergency device according to Claim 2, **characterized in that** said first sensor means (14) also have a second input (28) connectable to said first input (27) of the first sensor means (14) when the value of said physical quantity has said specified relation to said threshold value; and **in that** said safety means (13) also comprise a third input (22) connectable to said earth line (6), a second output (29) connected to said second input (28) of said first sensor means (14), and impedance means (30) connected between said third input (22) and said second output (29) of said safety means (13).

4. Emergency device according to Claim 2 or 3, **characterized in that** said phase detector means (59) comprise first diode bridge means (75) connected between said first and said second input (20, 21) of said safety means (13).

5. Emergency device according to Claim 4, **characterized in that** it also comprises photocoupler means (86) interposed between said first diode bridge means (75) and said selective connection means (60).

6. Emergency device according to any one of Claims 2 to 5, **characterized in that** said safety means (13) also comprise earth connection detector means (58) to detect and indicate the presence of a correct connection of the safety means (13) to said earth line (6).

7. Emergency device according to Claim 6, **characterized in that** said earth connection detector means (58) comprise second diode bridge means (62) connected between said first input (20) of said safety means (13) and said earth line (6), and indicator means (69) connected to said second diode bridge means (62).

8. Emergency device according to any one of Claims 2 to 7, **characterized in that** said selective connection means (60) comprise relay means.

9. Emergency device according to any one of Claims 2 to 8, **characterized in that** it also comprises first power supply means (19) having a first and a second input (45, 46) connected to said phase line (4) and to said neutral line (5), and a first and a second output (47, 48) connected to said safety means (13) and providing a first and a second continuous potential to supply the safety means (13).

10. Emergency device according to any one of Claims 2 to 9, **characterized in that** it comprises second sensor means (16) connected to said first sensor means (14) and capable of detecting the value of a physical quantity to enable said first sensor means (14) to provide a current path between said first input (27) of the first sensor means (14) and said earth line (6) when the value of said physical quantity conforms to a specified relation.

11. Emergency device according to any one of Claims 2 to 10, **characterized in that** said safety means (13) also comprise auxiliary second power supply means (61).

12. Emergency device according to Claim 11, **characterized in that** said auxiliary second power supply means (61) comprise luminous indicator means (117) capable of indicating a condition of recharging of said auxiliary second power supply means (61).

13. Emergency device according to Claim 12, **characterized in that** said auxiliary second power supply means (61) comprise switch means (119) for cutting off said supply from said auxiliary second power supply means (61) to said safety means (13).

14. Safety device (13) for an emergency device (1) connectable to an electrical power supply network (2) through circuit-breaker means (3), said electrical supply network (2) comprising a phase line (4) set at a phase potential (V1), a neutral line (5) set at a neutral potential (V2) and an earth line (6) set at an earth potential (V3); said circuit-breaker means (3) having a first and a second input (7, 8) connected to said phase line (4) and to said neutral line (5) respectively, and a first and a second output (9, 10) set at said phase potential (V1) and at said neutral potential (V2) respectively; said emergency device (1) comprising first sensor means (14) for sensing a physical quantity and connected to said safety device (13); said safety device (13) being **characterized in that** it comprises a first and a second input (20, 21) each of which can be connected to either of said first and second output (9, 10) of said circuit-breaker means (3); phase detection means (59) for detecting which of the first and second input (20, 21) of the safety means (13) is set at said phase potential (V1) ; and selective connection means (60) controlled by said phase detection means (59) for selectively providing a current path between the input (20, 21) of the safety device (13) set at said phase potential (V1) and said earth line (6) when the value of said physical quantity has a predetermined relation to a threshold value.

15. Safety device according to Claim 14, for an emergency device (1) in which said first sensor means (14) has a first input (27) connectable to a first output (23) of said safety device (13), and provides a current path between its first input (27) and said earth line (6) when the value of said physical quantity has said predetermined relation to said threshold value; **characterized in that** said selective connection means (60) selectively connects the first output (23) of the safety device (13) to the first input (20) of the safety device (13) when the first input (20) of the safety device (13) is set at said phase potential (V1), and to the second input (21) of the safety device (13) when the second input (21) of the safety device (13) is set at said phase potential (V1).

16. Safety device according to Claim 15, **characterized in that** it also comprises a third input (22) connectable to said earth line (6), a second output (29) connectable to a second input of said first sensor means (14), and impedance means (30) connected between said third input (22) and said second output (29) of said safety device (13).

17. Safety device according to Claim 15 or 16, **characterized in that** said phase detector means (59) comprise first diode bridge means (75) connected between said first and said second input (20, 21) of said safety device (13).

18. Safety device according to Claim 17, **characterized in that** it also comprises photocoupler means (86) interposed between said first diode bridge means (75) and said selective connection means (60).

19. Safety device according to any one of Claims 14 to 18, **characterized in that** it also comprises earth connection detector means (58) to detect and indicate the presence of a correct connection of the safety device (13) to said earth line (6).

20. Safety device according to Claim 19, **characterized in that** said earth connection detector means (58) comprise second diode bridge means (62) connected between said first input (20) of said safety device (13) and said earth line (6), and indicator means (69) connected to said second diode bridge means (62).

21. Safety device according to any one of Claims 14 to 20, **characterized in that** said selective connection means (60) comprise relay means.

22. Safety device according to any one of Claims 14 to 21, **characterized in that** it also comprises auxiliary power supply means (61).

23. Safety device according to any Claim 22, **characterized in that** said auxiliary power supply means (61) comprise luminous indicator means (117) capable of indicating a condition of recharging of said auxiliary power supply means (61).

24. Safety device according to Claim 23, **characterized in that** said auxiliary power supply means (61) comprise switch means (119) for cutting off said power supply from said auxiliary power supply means (61) to said safety device (13).
